# FASCICULE DE BREVET EUROPEEN

(11) **EP 3 764 784 B1**
(45) Date de publication et mention de la délivrance du brevet: **01.01.2025**
(21) Numéro de dépôt: 19717529.2
(22) Date de dépôt: 14.03.2019
(51) Int. Cl.: A01M 1/22, E01H 11/00, A01M 21/04, A01M 17/00, H05B 6/76, H05B 6/80

(54) **TETE D'APPLICATION D'UN APPAREIL DE TRAITEMENT DES SOLS PAR MICRO-ONDES POURVUE D'UN ORGANE LIMITANT LA DISPERSION DES MICRO-ONDES ET APPAREIL CORRESPONDANT**
APPLIKATORKOPF EINER VORRICHTUNG ZUR BEHANDLUNG VON BÖDEN MIT MIKROWELLEN MIT EINEM ELEMENT ZUR BEGRENZUNG DER DISPERSION DER MIKROWELLEN UND ENTSPRECHENDE VORRICHTUNG
APPLICATOR HEAD OF AN APPARATUS FOR TREATING SOILS WITH MICROWAVES, PROVIDED WITH A MEMBER LIMITING THE DISPERSION OF THE MICROWAVES AND CORRESPONDING APPARATUS

(30) Priorité: 14.04.2018 FR 1853280
(43) Date de publication de la demande: 20.01.2021
(73) Titulaire: Grange, Emile, 42110 Cleppe (FR); Grange, Jérémy, 42110 Cleppe (FR); Grange, Kévin, 42110 Cleppe (FR)
(72) Inventeur: Grange, Emile, 42110 Cleppe (FR); Grange, Jérémy, 42110 Cleppe (FR); Grange, Kévin, 42110 Cleppe (FR)
(74) Mandataire: Dennemeyer & Associates S.A.
(86) Numéro de dépôt international: PCT/FR2019/050559
(87) Numéro de publication internationale: WO 2019/197741

(56) Documents cités:
- AU-B2- 633 679
- CN-A- 106 614 491
- KR-A- 20010 084 756
- KR-B1- 101 639 941
- US-A- 4 319 856
- US-A1- 2003 215 354
- US-A1- 2012 091 123

## Description

La présente invention concerne une tête d'application d'un appareil de traitement des sols par micro-ondes pourvue d'un organe limitant la dispersion des micro-ondes.

L'utilisation des micro-ondes pour traiter les sols est connue. En particulier, on utilise des micro-ondes, donc un rayonnement électromagnétique à haute fréquence, pour assainir et désherber les sols à usage agricole et/ou maraicher. L'emploi des micro-ondes permet une destruction durable des agents pathogènes, des larves et œufs d'insectes et des graines dans le sol. De la sorte, on obtient un sol sain, prêt à l'emploi, sans utilisation de produits chimiques polluants et à effet rémanent, avec un travail du sol limité. De ce fait, l'utilisation de micro-ondes est particulièrement intéressante pour réaliser un désherbage efficace.

On connait par US-A-4 370 534 un appareil adapté au désherbage des voies ferrées dans lequel la tête d'émission des micro-ondes est positionnée dans un caisson rigide ouvert sur la voie ferrée.

US-A-2002 150 425 décrit un appareil pour sécher et compacter les sols. Une partie de l'appareil comprend un tambour adapté pour émettre des micro-ondes en direction du sol afin de sécher ce dernier. Des bavettes périphériques sur le tambour limitent la dispersion des micro-ondes. De tels appareils sont particulièrement adaptés au travail sur un sol meuble ou du moins sans partie dure et relativement plan.

US-A- 2010 322 713 divulgue un appareil de désherbage des voies de circulation telles que des routes avec une cloche montée sur un bras articulé. La cloche abrite la tête d'émission des micro-ondes et elle se plaque sur la voie de circulation, cela de manière étanche grâce à un joint périphérique. On note qu'une telle solution est particulièrement adaptée au désherbage d'une voie de circulation plane, telle une route. Or, les herbes poussent généralement dans les zones où s'accumule les déchets et matières organiques qui forment le substrat de développement des herbes. Ces zones sont souvent des angles et/ou les zones de jonction entre un trottoir et la chaussée de la voie de circulation.

US-A-2012091123 décrit une tête d'application de micro-ondes sur le sol avec des organes de types plaque qui limitent la dispersion des ondes. On connait également par US-A-4319856, US-A-2003215354 et CN-A-106614491 l'utilisation de chaines autour d'une tête d'application de micro-ondes pour limiter la dispersion des ondes.

Par ailleurs, les appareils de l'état de la technique soit sont adaptés pour traiter des sols à usage agricole, soit sont adaptés au désherbage de parties dures ne craignant ni les chocs ni les griffures telles que des parties goudronnées. Or, certaines parties d'une voie de circulation peuvent être pourvues d'un revêtement sensible aux rayures, par exemple des parties peintes ou recouvertes d'un polymère, par exemple un passage pour piéton. En variante, certaines parties d'une voie de circulation peuvent être meubles, par exemple lorsqu'elles sont couvertes de gravier ou de sable.

De plus, les réglementations actuellement en vigueur proscrivent, pour les collectivités, l'emploi de produits chimiques dans le désherbage des voies de circulation, que ce soit sur route ouverte, en ville ou sur les voies ferrées ne permettent pas l'utilisation des appareils actuels. Ainsi, compte tenu des configurations des zones à traiter, à savoir avec des angles et/ou des zones en devers, de la nature de la zone à traiter, il convient de prévoir un appareil de traitement des sols par micro-ondes dont non seulement la tête d'application des rayonnements électromagnétiques à haute fréquence est suffisamment mobile pour épouser les contours de la zone à traiter mais également adaptée pour effectuer les opérations de désherbage et d'assainissement en toute sécurité, en limitant toute fuite de micro-ondes hors de la zone à traiter, cela que la zone soit dure ou meuble. En d'autres termes, les appareils de l'état de la technique ne sont pas adaptés au désherbage, en toute sécurité, des voies de circulation à géométrie complexe et/ou de nature dure ou meuble destinées à la circulation des véhicules et/ou des piétons.

C'est à ces inconvénients qu'entend plus particulièrement remédier l'invention en proposant une tête d'application d'un appareil de traitement des sols par micro-ondes adapté au traitement des voies de circulation telles que celles rencontrées en milieu urbain et périurbain, cela en évitant toute fuite de micro-ondes.

La présente invention est mentionnée dans le jeu de revendications en annexe.

A cet effet, l'invention a pour objet une tête d'application d'un appareil de traitement des sols par micro-ondes telle que définie par l'objet de la revendication indépendante 1. Des modes de réalisation préférés sont décrits dans les revendications dépendantes.

Avec une telle configuration, la tête d'application des micro-ondes est configurée en cloche. La cloche a un fond rigide et une paroi périphérique entourant tout le ou les conduits de guidage des micro-ondes avec une pluralité d'organes allongés et indépendants, en forme de poils, chacun de ces organes étant mobiles selon au moins une direction par rapport au fond de la cloche sur lequel ils sont montés. De par la nature du matériau constitutif des éléments, donc selon leur souplesse, leur disposition et par leur possibilité de mouvement, les éléments allongés sont en permanence en contact avec la zone à traiter, cela quelle que soit la configuration géométrique et la nature de celle-ci. Il est donc aisé de traiter des zones de voies de circulation comprenant des angles, des devers, cela autant sur une voie de circulation en un matériau résistant que sur une voie de circulation en un matériau sensible aux rayures ou meuble.

Selon des aspects avantageux mais non obligatoires de l'invention, une telle tête d'application de micro-ondes peut comprendre une ou plusieurs des caractéristiques suivantes:
- les organes allongés sont pleins et réalisés avec un matériau dont au moins une partie contient des particules métalliques.
- Les organes allongés sont creux avec des parois réalisées avec un matériau dont au moins une partie contient des particules métalliques.
- les organes allongés creux sont pourvus d'une extrémité adaptée pour être reliée à une source de fluide sous pression.
- Les organes allongés sont assemblés par paquets montés sur un rail lui-même introduit dans le rail ménagé sur le bord de la partie rigide de la tête d'application.
- Les organes allongés montés sur le bord de la partie rigide de la tête d'application sont de même nature.
- Les organes allongés montés sur le bord de la partie rigide de la tête d'application sont de natures différentes.
- Une toile en un matériau imperméable aux micro-ondes est montée sur la paroi périphérique de la tête, entourant les organes allongés.
- La toile est pourvue d'une extrémité adaptée pour assurer un arrachage des végétaux présents sur la zone à traiter.
- la toile est en au moins deux parties.

L'invention concerne également un appareil de traitement des sols équipé d'au moins une tête d'application conforme à une des caractéristiques précédentes.

Selon des aspects avantageux mais non obligatoires, l'appareil de traitement des sols comprend au moins une brosse rotative métallique associée à la tête d'application conforme à une des caractéristiques précédentes.

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence au dessin suivant dans lequel:
- La figure 1 est un schéma simplifié d'un appareil de traitement des sols équipé d'une tête d'application conforme à un mode de réalisation de l'invention, les organes constitutifs de l'appareil étant à différentes échelles pour faciliter la lecture,
- la figure 2 est une vue simplifiée, de côté et à plus grande échelle d'une tête d'application des micro-ondes conforme à l'invention, les organes allongés étant illustrés à plus grande échelle que le reste de la tête,
- la figure 3 est une vue simplifiée, en coupe, d'une tête d'application des micro-ondes conforme à un autre mode de réalisation de l'invention,
- les figures 4 à 6 sont des vues de face, à plus grand échelle, d'organes allongés selon plusieurs modes de réalisation de l'invention,
- la figure 7 est une coupe transversale, à une autre échelle, d'un organe allongé conforme à un autre mode de réalisation de l'invention,
- la figure 8 est une vue de face, partielle et à une autre échelle, illustrant le montage de plusieurs organes allongés dans la partie rigide de la tête d'application des micro-ondes selon un mode de réalisation de l'invention,
- la figure 9 est une vue de face, à une autre échelle, d'un montage d'un élément allongé dans la partie rigide d'une tête d'application des micro-ondes selon un autre mode de réalisation de l'invention et
- la figure 10 est une vue simplifiée, en coupe, similaire à la figure 3 d'un autre mode de réalisation de l'invention.

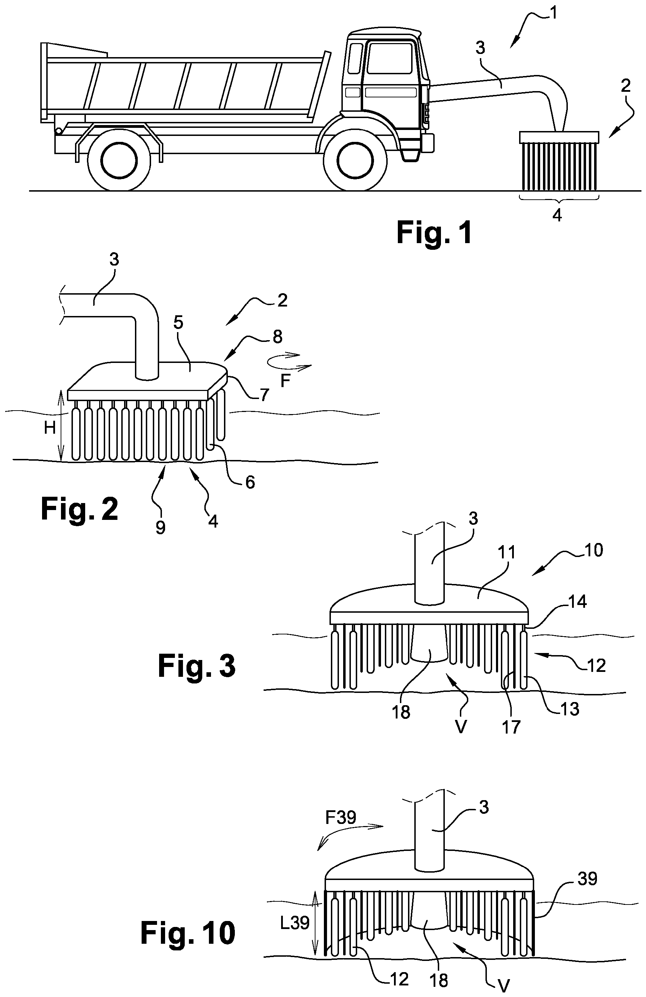

La figure 1 illustre, de manière schématique, un appareil de traitement des sols 1 conforme à l'invention. Ici, on a schématisé un appareil de type automoteur sur roues. En variante, il s'agit d'un appareil tracté. Une tête d'application 2 est illustrée montée sur l'avant de l'appareil 1 au bout d'un bras articulé 3. En variante, plusieurs têtes d'application sont prévues, montées soit à l'avant de l'appareil soit sur l'arrière ou en position latérale. Dans d'autres modes de réalisation, la tête d'application est située sous l'appareil de traitement des sols. Dans ce cas, le bras articulé supportant la tête est supprimé. On conçoit que ces diverses variantes de l'appareil sont adaptées à l'utilisation de ce dernier.

Un appareil de traitement des sols 1 est utilisé, dans le cadre de l'invention, pour traiter les sols au sens large. En particulier, il s'agit de désherber et/ou d'assainir des sols utilisés comme voie de circulation pour des véhicules et/ou des piétons. Le terme sol couvre donc des voies de circulation telles que des routes, rues, autoroutes, trottoirs, allées, parking, quais, pistes d'atterrissage, voie ferrée, terrasse, margelle de piscine, et plus généralement toutes voies, privées ou publiques, revêtues ou non, sur lesquelles se déplacent des véhicules terrestres tels que des voitures, camions, engins agricoles et de travaux publics, cycles, motos, aéronefs, trains, piétons ou animaux. Il peut donc s'agir, dans le cas d'une structure fermée, du sol d'un bâtiment à usage commercial, industriel ou autre.

L'appareil 1 est conduit par au moins une personne, étant entendu que la manœuvre de la tête d'application 2 peut être effectuée par une personne dédiée à cette tâche. En effet, il convient, en permanence, de positionner la tête d'application 2 au-dessus d'une partie 4 du sol à désherber, cela pour une durée variable selon la quantité et/ou la nature des végétaux présents sur la zone.

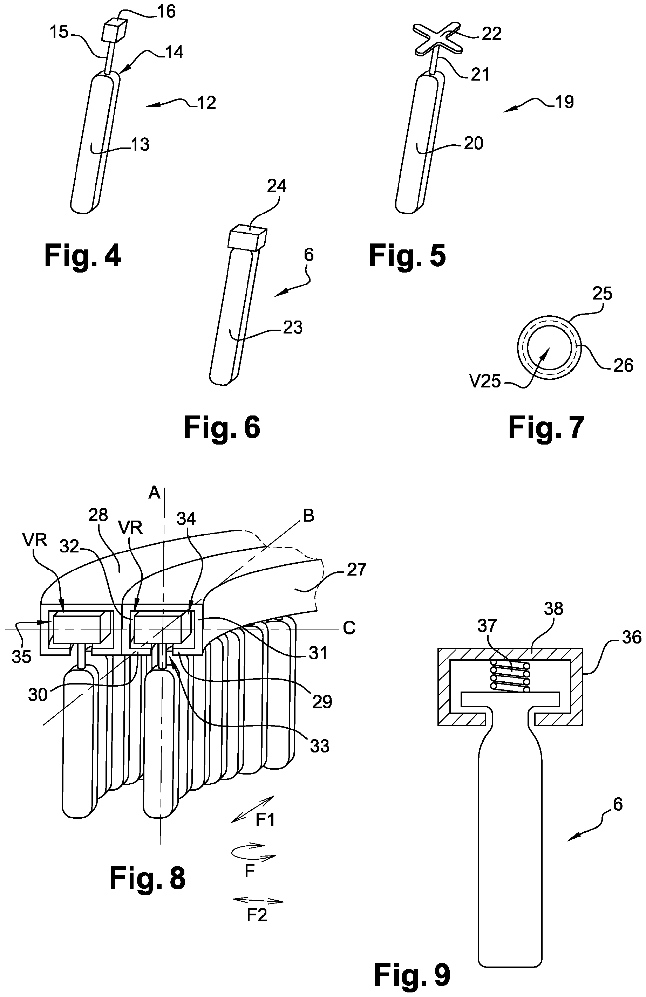

La figure 2 est une vue de la tête d'application 2, sans l'appareil 1, seule une portion du bras articulé 3 étant illustrée. Ici, la tête 2 est globalement configurée en parallélépipède à base carrée. En variante, la base est rectangulaire ou d'une autre forme géométrique. La tête 2 comprend une partie rigide 5 définissant le fond du volume interne de la tête 2. On note que les parois latérales de la tête 2 sont formées par une pluralité d'organes allongés 6. Ceux-ci sont illustrés à plus grande échelle aux figures 6 et suivantes.

Les organes 6 définissent, par leur longueur, la hauteur H de la tête 2. En d'autres termes, la longueur des organes 6 définit la distance H entre le fond 5 et la partie du sol 4 à traiter. Les organes 6 sont indépendants et fixés, par une extrémité 7, à la périphérie 8 de la partie 5. Cette fixation est adaptée pour assurer au moins un degré de liberté à l'organe 6. En l'espèce chaque organe 6 peut effectuer un mouvement, d'une amplitude limitée, d'oscillation, à la manière d'un pendule, autour de son point de fixation. Un tel mouvement, illustré par la double flèche F, sera détaillé plus loin dans le texte.

Les organes 6 sont, ici à la figure 2, illustrés régulièrement espacés, sur une seule rangée et sans être en contact mutuel. Une telle représentation facilite la lecture. Les organes 6 sont, de préférence, en contact mutuel afin de ne pas laisser d'espace vide entre eux, pour éviter, ou du moins limiter autant que possible, toute fuite de micro-ondes. De même, les organes 6 peuvent être répartis en quinconce et/ou sur plusieurs rangées.

L'extrémité 9, opposée à l'extrémité 7, est libre et elle est, si ce n'est en contact avec le sol, au moins située à une distance inférieure à 10 mm de ce dernier. De la sorte, la tête d'application 2 est globalement configurée en cloche, donc en volume ouvert en direction du sol. La dispersion des micro-ondes est limitée, vers le haut, par la présence du fond 5 rigide et, latéralement, par les organes 6.

La figure 3 est une coupe d'une tête d'application 10 correspondant à un autre mode de réalisation de l'invention. Ici le fond 11 est circulaire, en forme de disque. Les organes allongés 12 sont représentés à plus grande échelle à la figure 4. Ils correspondent à un mode de réalisation de l'invention. Les organes 12 comportent un corps principal 13 et, à une extrémité 14 du corps 13, une tige 15. L'extrémité libre 16 de la tige 15 est de forme cubique. L'extrémité 16 est de forme adaptée pour être solidarisée, avec au moins un degré de liberté, au fond 11 de la tête d'application 10.

Comme cela ressort de la figure 3, les organes 12 sont disposés, avantageusement en quinconce, sur plusieurs rangées en périphérie du fond 11. On réalise ainsi une paroi avec une épaisseur telle que tout rayonnement électromagnétique à hautes fréquences est bloqué dans le volume interne V de la tête d'application 10 défini entre le fond 11 et les organes 12.

On note également que des lamelles 17 sont intercalées entre les organes 12. Ces lamelles 17 sont, par exemple, en un matériau différent du matériau constitutif de des organes 12. En variante, elles sont dans le même matériau. A titre d'exemple non limitatifs, les lamelles 17 sont pleines ou en forme de treillis, en textile, en métal, ou en polymères.

En variante, d'autres organes, telle une toile de protection, peuvent être fixés en périphérie sur la tête d'application 2 ou 10. Dans un tel cas, la toile entoure les organes 6 ou 12 et les lamelles 17. Avantageusement, une telle toile est également en un matériau adapté pour limiter la diffusion des micro-ondes. Dans tous les cas, s'il convient d'empêcher la dispersion des micro-ondes hors du volume V défini par la tête d'application 2 ou 10, il est nécessaire que, dans le volume V, rien n'entrave l'application des micro-ondes par le conduit d'application 18 sur la zone à traiter 4.

La figure 4 illustre un organe allongé 12. Le corps 13 est, par exemple, en polymère ou en textile, recouvert de particules métalliques. En variante, les particules métalliques sont incorporées dans le matériau constitutif du corps 13. On conçoit que différents matériaux, seuls ou associés, peuvent être utilisés pour réaliser le corps 13, pour autant que ces matériaux soient imperméables aux micro-ondes et qu'ils permettent de réaliser un corps 13 souple et insensibles aux conditions environnementales rencontrées en extérieur.

La tige 15 est de section très inférieure à celle du corps 13. Ici, elle est sous forme d'une tige à section transversale circulaire. En variante, elle a une section carrée, rectangulaire ou autre. Il en est d'ailleurs de même avec le corps 13, sa section transversale peut être carrée, rectangulaire, circulaire ou autre. La tige 15 est, avantageusement, en un matériau dont la capacité à se cintrer et à revenir à sa forme initiale, est au moins égale à celle du corps 13.

L'extrémité 16 de la tige 15 est configurée en un cube, par exemple en métal ou en polymères. Ce cube 16 définit un moyen de liaison entre l'organe 12 et le fond 11 de la tête d'application. Cette liaison, qui assure un degré de liberté à l'organe 12 par rapport au fond 11, sera décrite plus en détail aux figures 8 et 9.

La figure 5 illustre un autre mode de réalisation d'un organe allongé. Ici, un organe 19 comprend un corps principal 20 et une tige 21, qui sont, pour simplifier la lecture, similaires au corps 13 et à la tige 15. Ici, l'extrémité 22 de la tige 21 est en forme de croix. Comme le cube 16, la croix 22 assure une liaison entre l'organe 19 et le fond de la tête d'application, en ménageant au moins un degré de liberté par rapport à cette dernière.

La figure 6 illustre plus en détail un organe 6, tel que représenté à la figure 2. Celui-ci comprend un corps principal 23, par exemple dans un même matériau que celui constitutif des organes 12 et 19. Ici, il n'y a pas de tige, un organe de liaison 24 entre l'organe 6 et le fond 5 de la tête d'application 2 est fixé directement sur le corps 23. Dans ce cas, si on réalise toujours une liaison avec au moins un degré de liberté entre l'organe 6 et le fond 5, on ne bénéficie plus de la souplesse de la tige. Pour pallier à cela, le matériau et/ou les dimensions du corps 23 de l'organe 6 sont adaptés. En d'autres termes, la souplesse de l'organe 6 en tant que tel est supérieure à celle des organes 12 et 19.

La figure 7 illustre en coupe transversale un corps d'un organe allongé. Ici le corps 25 est à section transversale circulaire. En variante, la forme est différente, par exemple, il peut s'agir de la section transversale correspondant aux organes 6, 12 ou 19, donc de forme carrée ou rectangulaire. Le corps 25 est creux, avantageusement sur toute sa longueur. Les parois 26 du corps 25 sont chargées, au moins sur une partie, en particules métalliques permettant ainsi de définir une paroi imperméable aux rayonnements électromagnétiques tout en préservant la souplesse du corps 25. En variante, la souplesse du corps 25 n'est pas identique sur toute sa longueur mais progressive, son extrémité libre offrant la plus grande souplesse. De cette manière on adapte en permanence le comportement de l'organe allongé à la nature et/ou à la géométrie de la zone à traiter.

Le volume V25 intérieur du corps 25 est soit vide soit rempli d'air maintenu en surpression par rapport à la pression extérieure. On réalise ainsi des organes allongés dont les corps 25 est en forme de boudin, éventuellement gonflable. L'utilisation d'air dans les corps des organes allongés génèrent un gain de poids et de matière dans la réalisation des organes allongés, sans altérer l'imperméabilité aux micro-ondes. En variante, le volume interne V25 de chaque organe est rempli avec un autre matériau, celui-ci pouvant être différent entre les éléments.

La figure 8 illustre la liaison entre un organe allongé 12 et le fond 11 de la tête d'application 10. Ici, deux rails 27, 28 sont accolés en périphérie du fond 11. Ces rails sont configurés en U à fond plat, avec les extrémités 29, 30 des branches 31, 32 pliées à angles droit et orientées l'une vers l'autre. Un espace 33 est ménagé entre les extrémités 29, 30. En d'autres termes, la section transversale d'un rail 27 ou 28 est configurée en rectangle avec une découpe définissant l'espace 33, qui est ménagée dans un des côtés du rectangle.

L'espace 33 est orienté vers le bas en regardant la figure 8, donc de facto en direction de la zone à traiter 4. Les organes 12 sont insérés, par leurs extrémités 16, dans la tranche d'extrémité ouverte 34, 35 de chaque rail 27, 28. On conçoit que, d'une part pour éviter toute sortie accidentelle des organes 12 hors des rails 27, 28 et, d'autre part, pour pouvoir introduire les organes 12 dans les rails 27, 28, le fond 11 est équipé d'un moyen d'accès aux rails. Il s'agit, à titre d'exemple non limitatif, de l'ouverture en deux parties du fond 5 ou 11 des têtes d'application 2 ou 10.

On insère dans le volume intérieur VR des rails 27, 28 les extrémités 16 des organes 12, la tige 15 de chaque organe passant par l'espace 33, de sorte à maintenir l'ensemble du corps 13 en dehors du rail 27, 28.

On note que les extrémités 16 en place dans le volume VR ne sont pas en contact avec les faces internes des parois 31, 32 des rails. De même, les dimensions de la tige 15 sont inférieures à celles de l'espace 33. On ménage ainsi au moins un degré de liberté, selon une des doubles flèches F, F1 ou F2, donc un mouvement de pivotement autour respectivement d'au moins un des axes A, B et C.

Les organes 12 peuvent ainsi pivoter afin de s'adapter à la configuration, donc au relief, de la zone à traiter 4, tout en maintenant par les extrémités libres du corps 13 un contact avec la zone 4. Ainsi on limite toute fuite de micro-ondes.

La figure 9 illustre un autre mode de réalisation de l'invention. Ici un organe 6 est introduit dans un rail en U référencé 36, donc de forme et de section transversale similaires à ce qui est illustré à la figure 8. Comme indiqué précédemment, l'absence de tige limite la souplesse de l'organe et donc, de facto, les possibilités de mouvements de l'organe 6 par rapport au rail 36. Pour pallier à cela, un organe de rappel 37 est monté entre le fond 38 du rail 36 et l'extrémité 24 de l'organe 6. Ici, l'organe de rappel 37 est un ressort à boudins. En variante, il s'agit d'un organe de rappel d'un autre type, par exemple un ressort à lames, un élément en caoutchouc ou un petit vérin.

Dans d'autres modes de réalisation non illustrés, les organes allongés sont assemblés par paquets sur des rails similaires aux rails 27, 28 ou 36 mais de dimensions inférieures. Ainsi, on insère dans les rails 27, 28 ou 36 non pas les organes un par un mais par paquets de plusieurs organes prémontrés sur des rails dits internes.

La figure 10 illustre un autre mode de réalisation de l'invention. Ici des organes 12, donc similaires à ceux illustrés aux figures 2, 3 et 4, sont entourés par une toile de protection 39. La toile 39 encercle complétement le volume V et elle a une largeur L39 correspondant à la longueur des organes 12. Cette toile 39 est réalisée, dans un mode de réalisation, dans un matériau imperméable aux micro-ondes. En variante, elle recouverte sur au moins une face, d'un revêtement imperméable aux micro-ondes. En variante, elle est composée de plusieurs couches ou feuilles dont au moins une est en un matériau imperméable aux micro-ondes.

La toile 39, outre un rôle de protection complémentaire contre la dispersion des micro-ondes peut également participer à la destruction des végétaux présents sur la zone à traiter. Pour cela, son extrémité libre destinée à être en contact avec la zone à traiter est en un matériau métallique abrasif, par exemple des fils ou crochets métalliques. Cette action d'arrachage des végétaux peut être optimisée si la toile 39 est montée sur un rail rotatif, de sorte à effectuer un mouvement de rotation selon la double flèche F39 autour du fond 11. On conçoit aisément que, dans un mode de réalisation, la toile 39 est en deux parties, afin de remplacer facilement la partie de la toile en contact avec la zone à traiter qui est celle subissant l'usure la plus importante.

En variante, l'invention est associée à une brosse rotative métallique, connue en soi. Une telle brosse est positionnée soit à l'extérieur de la tête 2, donc en avant de celle-ci selon le sens d'avancement du véhicule soit dans la tête 2, par exemple entre la toile 39 et les organes allongés.

## Revendications

1. Tête d'application (2 ; 10) d'un appareil (1) de traitement des sols par micro-ondes comportant une partie rigide (5 ; 11), en un matériau imperméable aux micro-ondes, formant le fond (5 ; 11) d'un volume de réception (V), ouvert sur une face, d'au moins un conduit de guidage (18) des micro-ondes sur une zone du sol (4) à traiter, ladite partie rigide (5 ; 11) étant maintenue à une distance (H ; L39) définie de la zone (4) à traiter et les parois latérales dudit volume de réception (V) étant réalisées en au moins un matériau imperméable aux micro-ondes, les extrémités libres des parois du volume de réception (V) étant pourvues d'au moins deux organes (6 ; 12 ; 19) adaptés pour limiter la dispersion des micro-ondes, lesdits organes (6 ; 12 ; 19) étant allongés et indépendants, en forme de poil, et comportent un corps principal (13 ; 20 ; 23 ; 25) et à une extrémité (14) du corps principal une tige (15 ; 21), une extrémité libre (9) du corps (13 ; 20 ; 23 ; 25) de chaque organe (6 ; 12 ; 19) étant adaptée pour être en contact avec la zone du sol (4) à traiter, l'extrémité libre (16 ; 22 ) de la tige (15 ; 21) du corps (13 ; 20 ; 23 ; 25) étant adaptée pour être montée avec au moins un degré de liberté (F, F1, F2) sur le bord (8 ; 27, 28, 36) de la partie rigide (5 ; 11) de la tête d'application (2 ; 10), au moins le corps (13 ; 20 ; 23 ; 25) desdits organes (6 ; 12 ; 19) est en un matériau souple, et les organes allongés (6 ; 12 ; 19) sont montés en au moins une rangée de manière amovible (34, 35) dans au moins un rail (27, 28 ; 36) ménagé sur le bord (8 ; 27, 28, 36) de la partie rigide (5 ; 11) de la tête d'application (2 ; 10) .

2. Tête d'application selon la revendication 1, **caractérisée en ce que** les organes allongés (6 ; 12 ; 19) sont pleins et réalisés avec un matériau dont au moins une partie contient des particules métalliques.

3. Tête d'application selon la revendication 1, **caractérisée en ce que** les organes allongés (6 ; 12 ; 19) sont creux avec des parois réalisées avec un matériau dont au moins une partie contient des particules métalliques.

4. Tête d'application selon la revendication 1, **caractérisée en ce que** les organes allongés creux sont pourvus d'une extrémité adaptée pour être reliée à une source de fluide sous pression.

5. Tête d'application selon la revendication 1, **caractérisée en ce que** les organes allongés sont assemblés par paquets montés sur un rail lui-même introduit dans le rail (27, 28 ; 36) ménagé sur le bord (8 ; 27, 28, 36) de la partie rigide (5 ; 11) de la tête d'application (2 ; 10).

6. Tête d'application selon l'une des revendications précédentes, **caractérisée en ce que** les organes allongés (6 ; 12 ; 19) montés sur le bord (8 ; 27, 28, 36) de la partie rigide (5 ; 11) de la tête d'application (2 ; 10) sont de même nature.

7. Tête d'application selon l'une des revendications 1 à 5, **caractérisée en ce que** les organes allongés (6 ; 12 ; 17 ; 19) montés sur le bord (8 ; 27, 28, 36) de la partie rigide (5 ; 11) de la tête d'application (2 ; 10) sont de natures différentes.

8. Tête d'application selon l'une des revendications précédentes, **caractérisée en ce qu'**une toile (39) en un matériau imperméable aux micro-ondes est montée sur la paroi périphérique de la tête (10), entourant les organes allongés (12).

9. Tête d'application selon la revendication 8, **caractérisée en ce que** la toile (39) est pourvue d'une extrémité adaptée pour assurer un arrachage des végétaux présents sur la zone à traiter.

10. Tête d'application selon l'une des revendications 8 ou 9, **caractérisée en ce que** la toile (39) est en au moins deux parties.

11. Appareil (1) de traitement des sols équipé d'au moins une tête d'application (2 ; 10) conforme à une des revendications précédentes.

12. Appareil de traitement des sols selon la revendication 11, **caractérisé en ce qu'**il comprend au moins une brosse rotative métallique associée à la tête d'application (2 ; 10) conforme à une des revendications 1 à 10.

## Patentansprüche

1. Applikationskopf (2; 10) einer Vorrichtung (1) zur Bodenbehandlung durch Mikrowellen, die einen starren Teil (5; 11) aus einem für Mikrowellen undurchlässigen Material umfasst, der den Boden (5; 11) eines auf einer Seite offenen Aufnahmevolumens (V) für mindestens eine Leitung zur Führung (18) der Mikrowellen über einen zu behandelnden Bodenbereich (4) bildet, wobei der starre Teil (5; 11) in einem definierten Abstand (H; L39) von dem zu behandelnden Bereich (4) gehalten wird und die Seitenwände des Aufnahmevolumens (V) aus mindestens einem für Mikrowellen undurchlässigen Material hergestellt sind, wobei die freien Enden der Wände des Aufnahmevolumens (V) mit mindestens zwei Organen (6; 12; 19) versehen sind, die dazu geeignet sind, die Streuung der Mikrowellen zu begrenzen, wobei die Organe (6; 12; 19) länglich und unabhängig, haarförmig sind und einen Hauptkörper (13; 20; 23; 25) und an einem Ende (14) des Hauptkörpers einen Schaft (15; 21) umfassen,
wobei ein freies Ende (9) des Körpers (13; 20; 23; 25) jedes Organs (6; 12; 19) dazu geeignet ist, mit dem zu behandelnden Bodenbereich (4) in Kontakt zu stehen, wobei das freie Ende (16; 22) des Schafts (15; 21) des Körpers (13; 20; 23; 25) dazu geeignet ist, mit mindestens einem Freiheitsgrad (F, F1, F2) an der Kante (8; 27, 28, 36) des starren Teils (5; 11) des Applikationskopfes (2; 10) montiert zu sein, mindestens der Körper (13; 20; 23; 25) der Organe (6; 12; 19) aus einem flexiblen Material besteht und die länglichen Organe (6; 12; 19) in mindestens einer Reihe abnehmbar (34, 35) in mindestens einer Schiene (27, 28; 36) montiert sind, die an der Kante (8; 27, 28, 36) des starren Teils (5; 11) des Applikationskopfes (2; 10) angeordnet ist.

2. Applikationskopf nach Anspruch 1, **dadurch gekennzeichnet, dass** die länglichen Organe (6; 12; 19) massiv und aus einem Material hergestellt sind, von dem mindestens ein Teil Metallteilchen enthält.

3. Applikationskopf nach Anspruch 1, **dadurch gekennzeichnet, dass** die länglichen Organe (6; 12; 19) hohl sind, mit Wänden, die aus einem Material hergestellt sind, von dem mindestens ein Teil Metallteilchen enthält.

4. Applikationskopf nach Anspruch 1, **dadurch gekennzeichnet, dass** die länglichen hohlen Organe mit einem Ende versehen sind, das dazu geeignet ist, mit einer Quelle von unter Druck stehendem Fluid verbunden zu werden.

5. Applikationskopf nach Anspruch 1, **dadurch gekennzeichnet, dass** die länglichen Organe nach Paketen zusammengesetzt sind, die auf einer Schiene montiert sind, die ihrerseits in die Schiene (27, 28; 36) eingeführt ist, die am Rand (8; 27, 28, 36) des starren Teils (5; 11) des Applikationskopfes (2; 10) angeordnet ist.

6. Applikationskopf nach einem der vorhergehenden Ansprüche, **dadurch gekennzeichnet, dass** die länglichen Organe (6; 12; 19), die am Rand (8; 27, 28, 36) des starren Teils (5; 11) des Applikationskopfes (2; 10) montiert sind, von gleicher Art sind.

7. Applikationskopf nach einem der Ansprüche 1 bis 5, **dadurch gekennzeichnet, dass** die länglichen Organe (6; 12; 17; 19), die am Rand (8; 27, 28, 36) des starren Teils (5; 11) des Applikationskopfes (2; 10) montiert sind, von unterschiedlicher Art sind.

8. Applikationskopf nach einem der vorhergehenden Ansprüche, **dadurch gekennzeichnet, dass** ein Tuch (39) aus einem für Mikrowellen undurchlässigen Material an der Umfangswand des Kopfes (10) montiert ist, welche die länglichen Organe (12) umgibt.

9. Applikationskopf nach Anspruch 8, **dadurch gekennzeichnet, dass** das Tuch (39) mit einem Ende versehen ist, das dazu geeignet ist, ein Ausreißen der auf dem zu behandelnden Bereich vorhandenen Pflanzen zu gewährleisten.

10. Applikationskopf nach einem der Ansprüche 8 oder 9, **dadurch gekennzeichnet, dass** das Tuch (39) aus mindestens zwei Teilen besteht.

11. Vorrichtung (1) zur Bodenbehandlung, die mit mindestens einem Applikationskopf (2; 10) nach einem der vorhergehenden Ansprüche ausgestattet ist.

12. Vorrichtung zur Bodenbehandlung nach Anspruch 11, **dadurch gekennzeichnet, dass** sie mindestens eine rotierende Metallbürste umfasst, die mit dem Applikationskopf (2; 10) nach einem der Ansprüche 1 bis 10 verknüpft ist.

## Claims

1. - Application head (2; 10) of an apparatus (1) for treating soils with microwaves including a rigid part (5; 11), in a material impermeable to microwaves, forming the bottom (5; 11) of a receiving volume (V), open on one face, of at least one microwave-waveguide (18) on a zone of soil (4) to treat, said rigid part (5; 11) being held at a defined distance (H; L39) from the zone (4) to treat and the side walls of said receiving volume (V) being made of at least one material impermeable to microwaves, the free ends of the walls of the receiving volume (V) being provided with at least two members (6; 12; 19) suitable for limiting the dispersion of the microwaves, said members (6; 12; 19) being elongated and independent, in the form of hair, and comprising a main body (13; 20; 23; 25) and at one end (14) of the main body, a rod (15; 21),
a free end (9) of the body (13; 20; 23; 25) of each member (6; 12; 19) being suitable for being in contact with the zone of the soil (4) to treat, the free end (16; 22 ) of the rod (15; 21) of the body (13; 20; 23; 25) being suitable for being mounted with at least one degree of freedom (F, F1, F2) on the edge (8; 27, 28, 36) of the rigid part (5; 11) of the application head (2; 10), at least the body (13; 20; 23; 25) of said members (6; 12; 19) being a flexible material, and the elongated members (6; 12; 19) are mounted on at least one row of removable material (34, 35) in at least one rail (27, 28; 36) arranged on the edge (8; 27, 28, 36) of the rigid part (5; 11) of the application head (2; 10).

2. - Application head according to claim 1, **characterized in that** the elongated members (6; 12; 19) are solid and made of a material, at least one part of which containing metal particles.

3. - Application head according to claim 1, **characterized in that** the elongated members (6; 12; 19) are hollow and made of a material, at least one part of which containing metal particles.

4. - Application head according to claim 1, **characterized in that** the hollow elongated members are provided with an end suitable for being connected to a pressurized fluid source.

5. - Application head according to claim 1, **characterized in that** the elongated members are assembled by packets mounted on a rail, said rail introduced into a rail (27, 28; 36) arranged on the edge (8; 27, 28, 36) of the rigid part (5; 11) of the application head (2; 10).

6. - Application head according to one of the previous claims, **characterized in that** the elongated members (6; 12; 19) mounted on the edge (8; 27, 28, 36) of the rigid part (5; 11) of the application head (2; 10) are of the same type.

7. - Application head according to one of claims 1 to 5, **characterized in that** the elongated members (6; 12; 17; 19) mounted on the edge (8; 27, 28, 36) of the rigid part (5; 11) of the application head (2; 10) are of different types.

8. - Application head according to one of the previous claims, **characterized in that** a cloth (39) in a material impermeable to microwaves is mounted on a peripheral part of the head (10) surrounding the elongated members (12).

9. - Application head according to claim 8, **characterized in that** the cloth (39) is provided with a suitable end to ensure the ripping out of plants present on the zone to treat.

10. - Application head according to one of claims 8 or 9, **characterized in that** the cloth (39) is in at least two parts.

11. - Apparatus (1) for the treatment of soils equipped with at least one application head (2; 10) according to one of the previous claims.

12. - Apparatus for the treatment of soils according to claim 11, **characterized in that** said apparatus comprises at least one rotating metal brush associated with the application head (2; 10) according to one of claims 1 to 10.
